# EUROPÄISCHE PATENTANMELDUNG

(11) **EP 0 571 820 A2**
(43) Veröffentlichungstag der Anmeldung: **01.12.1993**
(21) Anmeldenummer: 93107708.5
(22) Anmeldetag: 12.05.1993
(51) Int. Cl.: B01D 1/00, B01D 53/34

(54) **Verfahren zum Entfernen von Metallcarbonylverbindungen aus Gasen**

(30) Priorität: 27.05.1992 DE 4217471
(71) Anmelder: HOECHST AKTIENGESELLSCHAFT, D-65926 Frankfurt am Main (DE)
(72) Erfinder: Diekhaus, Gerhard, Dipl.-Chem., W-4200 Oberhausen (DE); Kampmann, Detlef, Dipl.-Chem., W-8906 Gersthofen (DE); Kniep, Claus, W-4200 Oberhausen (DE)

(57) **Zusammenfassung**

Die vorliegende Erfindung betrifft ein Verfahren zum Entfernen von Metallcarbonylverbindungen aus Gasen. Metallcarbonylverbindungen dienen bei einer Reihe technischer Verfahren, beispielsweise bei Carbonylierungen, als Katalysator. Hierbei fallen häufig Abgase an, die neben gasförmigen Einsatzstoffen noch die als Katalysator verwendeten Metallcarbonyle und deren Folge- und Abbauprodukte enthalten. Man setzt die Gase mit einer wäßrigen Wasserstoffperoxidlösung um. Das Metall gelangt dabei als wasserlösliche Verbindung in die wäßrige Lösung.

## Beschreibung

Die vorliegende Verbindung betrifft ein Verfahren zum Entfernen von Metallcarbonylverbindungen aus Gasen.

Unter Metallcarbonylverbindungen versteht man Komplexverbindungen, in denen CO-Moleküle koordinativ an Metallatome gebunden sind. Daneben können die Metallcarbonylverbindungen noch weitere Liganden wie Wasserstoff, Halogene, Stickstoffoxide, Cyanogruppen, Alkene, Diene oder andere ungesättigte organische Moleküle enthalten. Außerdem sind zahlreiche Carbonylkomplexe bekannt, die mehrere, gleiche oder verschiedene Metallatome aufweisen; sie werden auch als Cluster-Verbindungen bezeichnet. Auf Grund ihres chemischen Verhaltens, z.B. die Austauschbarkeit der Liganden und die Redoxeigenschaften der Metallatome, spielen Metallcarbonylverbindungen als Katalysatoren für Carboxylierungen, Alkylierungen, Acylierungen und insbesondere für Carbonylierungen eine wichtige Rolle.

Der Begriff Carbonylierung bezeichnet allgemein die Einführung einer Carbonylgruppe in eine organische Verbindung. Zu den wichtigsten, auch technisch durchgeführten Carbonylierungen zählen die Synthese von Aldehyden durch Umsetzung von Olefinen mit Kohlenmonoxid und Wasserstoff sowie die Synthese von Carbonsäuren und Carbonsäureanhydriden durch Umsetzung von Alkoholen, Estern und/oder Äthern mit Kohlenmonoxid. Diese Carbonylierungen verlaufen als Einschiebungsreaktion üblicherweise, wie zuvor erwähnt, in Gegenwart von Metallcarbonylverbindungen als Katalysatoren.

Bei Durchführung dieser Umsetzungen fallen häufig Abgase an, die neben gasförmigen Einsatzstoffen wie Acetylen, Olefine und Kohlenstoffmonoxid auch noch die als Katalysator verwendeten Metallcarbonylverbindungen - beispielsweise Nickelcarbonyle, Kobaltcarbonyle - und deren Folge- und Abbauprodukte enthalten. Daneben befinden sich auch noch Metallcarbonyle, die sich infolge der Umsetzung von Kohlenmonoxid mit den in den Reaktoren und Rohrleitungen verwendeten Werkstoffen bilden. Zu ihnen gehören insbesondere Carbonyle des Eisens, des Chroms und des Mangans.

Die Abtrennung der Metallcarbonylverbindungen aus den Gasen ist nicht nur aus wirtschaftlichen Gründen wünschenswert, sondern wegen der hohen Toxizität dieser Stoffe unbedingt erforderlich.

Die DE-B 407 085 betrifft ein Verfahren zur Entfernung von Metallcarbonylen aus Gasen, wobei man die Gase über poröse Kohle, die mit Chromsäurelösung oder Chromatlösung getränkt ist, leitet. Nachteilig bei dieser Arbeitsweise ist die Verwendung poröser aktiver Materialien. Zudem ist die Anwesenheit von Chrom als Schwermetall aus Gründen des Umweltschutzes unerwünscht.

Die DE 40 13 725 A1 beschreibt ein Verfahren zur Entfernung von Metallcarbonylverbindungen aus Gasen, in dem man die Gase mit einer wäßrigen Lösung eines Salzes der hypochlorigen Säure wäscht. Die Verwendung derartiger wäßriger Lösungen ist aus verschiedenen Gründen problematisch. Da die hypochlorige Säure eine sehr schwache Säure ist, reagieren die wäßrigen Lösungen ihrer Salze, insbesondere ihrer Alkalisalze, stark basisch. Sie sind wegen der Gefahr von Verätzungen und auf Grund ihrer Neigung, elementares Chlor abzuspalten, mit besonderer Vorsicht zu handhaben. Zudem begünstigen chlorhaltige Stoffe allgemein Korrosionsprozesse in Metallapparaturen und bereiten zudem Probleme bei der Aufarbeitung und Entsorgung.

Der vorliegenden Erfindung liegt die Aufgabe zugrunde, ein Verfahren zum Entfernen von Metallcarbonylen aus Gasen zur Verfügung zu stellen, das die vorstehend genannten Nachteile nicht aufweist, sich zudem technisch einfach realisieren läßt und sich leicht zugänglicher Hilfsstoffe bedient.

Gelöst wird diese Aufgabe durch ein Verfahren zum Entfernen von Metallcarbonylverbindungen aus Gasen. Es ist dadurch gekennzeichnet, daß man die Gase mit einer wäßrigen Wasserstoffperoxidlösung umsetzt. Das Metall gelangt dabei wahrscheinlich in Form eines wasserlöslichen Salzes in die wäßrige Lösung.

Zur Durchführung des erfindungsgemäßen Verfahrens ist es nicht erforderlich, sich hochkonzentrierter wäßriger Wasserstoffperoxidlösungen zu bedienen. Im allgemeinen genügt es, eine wäßrige Wasserstoffperoxidlösung mit einem Gehalt von 0,5 bis 15 Gew.-% Wasserstoffperoxid zu verwenden. Besonders einfach gestaltet sich das erfindungsgemäße Verfahren bei Gebrauch einer wäßrigen Wasserstoffperoxidlösung, die 1,0 - 10, insbesondere 1,5 - 5 Gew.-% Wasserstoffperoxid enthält.

Ein Vorteil des Verfahrens besteht darin, daß die wäßrige Wasserstoffperoxidlösung technisch leicht zugänglich ist und sich problemlos handhaben läßt. Darüber hinaus erweisen sich verdünnte wäßrige Peroxidlösungen auch als physiologisch unbedenklich. Zudem wird der Einsatz unerwünschter chlorhaltiger Substanzen vermieden.

Das erfindungsgemäße Verfahren eignet sich besonders zur Entfernung von Carbonylverbindungen von Metallen der Eisengruppe des Periodensystems der Elemente. Hierzu zählen Carbonyle des Nickels, des Eisens, des Kobalts aber auch Hydridocarbonyle wie Eisencarbonylwasserstoff oder Kobaltcarbonylwasserstoff.

Die wäßrige Wasserstoffperoxidlösung soll einen pH-Wert von 2,0 - 6,5, insbesondere 3,0 - 5,5 aufweisen.

Um die Abtrennung der Metallcarbonylverbindung aus den Gasen zu begünstigen, leitet man die Gase in feinverteilter Form durch die Wasserstoffperoxidlösung. Hierzu kann man sich bekannter Vorrichtungen wie Frittenböden, Siebplatten oder Lochscheiben bedienen. Besonders einfach gestaltet sich das erfindungsgemäße Verfahren bei Verwendung von Kolonnen, die entweder mit Füllkörpern beschickt sind oder geeignete Einbauten, wie Böden, enthalten. Man kann die Gase nach Art einer Gaswäsche durch eine Schicht von wäßrigem Wasserstoffperoxid von unten nach oben hindurchleiten. Besonders vorteilhaft ist es, in einer mit Füllkörpern gefüllten oder entsprechende Einbauten enthaltenden Kolonne, in der die wäßrige Wasserstoffperoxidlösung von oben nach unten fließt und das zu reinigende Gas von unten nach oben entgegenströmt, zu arbeiten. Es ist auch möglich, mehrere Waschstufen oder mehrere Kolonnen hintereinander zu schalten, um den Grad der Abtrennung der Metallcarbonylverbindungen zu erhöhen.

Das folgende Beispiel erläutert die Erfindung, ohne sie auf diese Ausführungsform zu beschränken.

### Experimenteller Teil

In einem mit einer Rührvorrichtung ausgestatteten 1 l-Autoklaven werden unter Ausschluß von Luft 70 g CoCO₃ und 600 ml Toluol vorgelegt. Man erwärmt unter Rühren auf 175°C und stellt durch Zugabe von CO und H₂ (Verhältnis 5 : 1) einen Druck von 27,5 MPa ein. Nach einer Stunde Reaktionszeit beendet man die Umsetzung von CoCO₃ zu Co₂(CO)₈ und kühlt auf Raumtemperatur ab.

Anschließend entnimmt man dem Autoklaven durch Entspannen je Stunde 20 l eines Co₂(CO)₈ enthaltenden Gases und leitet es durch zwei in Serie geschaltete Waschflaschen. Jede dieser Waschflaschen hat eine Höhe von 16 cm, einen Durchmesser von 13 cm und ist mit 2 Liter wäßriger Wasserstoffperoxidlösung (2 Gew.-% Wasserstoffperoxid) befüllt. Der Gasstrom tritt über eine, in einer Tauchtiefe von 15 cm angeordnete Fritte, die als Verteiler wirkt, ein. Insgesamt werden 74 l Gas über die beiden Waschflaschen geleitet.

Der Metallcarbonylgehalt des Gasstromes wird durch das erfindungsgemäße Verfahren in der ersten Waschflasche um 196 mg Co₂(CO)₈ je m³ Gas und in der zweiten Waschflasche um 8,2 mg Co₂(CO)₈ je m³ Gas reduziert.

## Patentansprüche

1. Verfahren zum Entfernen von Metallcarbonylverbindungen aus Gasen, dadurch gekennzeichnet, daß man die Gase mit einer wäßrigen Wasserstoffperoxidlösung umsetzt.

2. Verfahren nach Anspruch 1, dadurch gekennzeichnet, daß die wäßrige Wasserstoffperoxidlösung 0,5 bis 15 Gew.-% Wasserstoffperoxid enthält.

3. Verfahren nach Anspruch 1 oder 2, dadurch gekennzeichnet, daß die wäßrige Wasserperoxidlösung 1,0 bis 10, insbesondere 1,5 bis 5 Gew.-% Wasserstoffperoxid enthält.

4. Verfahren nach einem oder mehreren der Ansprüche 1 bis 3, dadurch gekennzeichnet, daß die wäßrige Wasserstoffperoxidlösung einen pH-Wert von 2,0 bis 6,5, insbesondere 3,0 bis 5,5 aufweist.

5. Verfahren nach einem oder mehreren der Ansprüche 1 bis 4, dadurch gekennzeichnet, daß man die Gase in feinverteilter Form durch die wäßrige Wasserstoffperoxidlösung leitet.

6. Verfahren nach einem oder mehreren der Ansprüche 1 bis 5, dadurch gekennzeichnet, daß man die Gase und die wäßrige Wasserstoffperoxidlösung im Gegenstrom durch eine Bodenkolonne führt.
